# EUROPEAN PATENT SPECIFICATION

(11) **EP 3 745 525 B1**
(45) Date of publication and mention of the grant of the patent: **03.01.2024**
(21) Application number: 18902037.3
(22) Date of filing: 26.11.2018
(51) Int. Cl.: H01M 10/613, H01M 10/625, H01M 10/647, H01M 10/653, H01M 10/6554, H01M 10/6556, H01M 50/209, H01M 50/244, H01M 50/249, H01M 10/04, H01M 50/262

(54) **POWER SUPPLY DEVICE, VEHICLE PROVIDED WITH POWER SUPPLY DEVICE, AND POWER STORAGE DEVICE**
STROMVERSORGUNGSVORRICHTUNG, MIT STROMVERSORGUNGSVORRICHTUNG AUSGERÜSTETES FAHRZEUG UND STROMSPEICHERVORRICHTUNG
DISPOSITIF D'ALIMENTATION ÉLECTRIQUE, VÉHICULE ÉQUIPÉ D'UN DISPOSITIF D'ALIMENTATION ÉLECTRIQUE, ET DISPOSITIF DE STOCKAGE D'ÉNERGIE

(30) Priority: 25.01.2018 JP 2018010948
(43) Date of publication of application: 02.12.2020
(73) Proprietor: SANYO Electric Co., Ltd., Daito-shi, Osaka 574-8534 (JP); Panasonic Holdings Corporation, Osaka 571-8501 (JP)
(72) Inventor: TERAUCHI, Shinobu, Chuo-ku Osaka-shi Osaka 540-6207 (JP); OMURA Tetsuji, Chuo-ku Osaka-shi Osaka 540-6207 (JP)
(74) Representative: Vigand, Philippe
(86) International application number: PCT/JP2018/043384
(87) International publication number: WO 2019/146238

(56) References cited:
- EP-A1- 2 357 689
- WO-A1-2012/133708
- WO-A1-2016/174855
- WO-A1-2016/174855
- JP-A- 2015 520 924
- US-A1- 2015 024 253

## Description

### TECHNICAL FIELD

The present invention relates to a power supply device in which a plurality of battery cells is stacked to form a battery stack, and a heat conduction plate is disposed in a thermally coupled state with the battery stack via end plates disposed at both ends of the battery stack, and a vehicle and power storage device including the power supply device.

### BACKGROUND ART

A typical power supply device includes a battery stack including a plurality of prismatic battery cells, a pair of end plates disposed on both end surfaces of the battery stack, and a bind bar coupling the pair of end plates. In this power supply device, the battery stack including the plurality of prismatic battery cells can be assembled by restraining the battery stack with the end plates and the bind bar. Furthermore, a power supply device having a structure in which a cooling plate is disposed in a thermally coupled state on the surface of the battery stack to provide forcible cooling in order to efficiently cool the plurality of battery cells constituting the battery stack has been developed. (See PTL 1). The document WO2016/174855 A1 discloses a power source device and vehicle equipped therewith.

### Citation List

### Patent Literature

PTL 1: Unexamined Japanese Patent Publication No. 2015-220117

### SUMMARY OF THE INVENTION

### Technical problem

In a power supply device that cools battery cells with a cooling plate, for example, the cooling plate is fixed to a battery stack via a plurality of bolts. However, in the power supply device having this structure, the bolts that fix the cooling plate can be loosened with time. When the bolts are loosened, there is a possibility that the thermal coupling state between the cooling plate and the battery stack will deteriorate and the cooling efficiency of the battery cells will decrease. Further, loosening of the bolts causes noise due to vibration, and when they are removed, it causes various failures, which is not preferable, and it is earnestly desired to minimize it.

The present invention has been developed for the purpose of solving the above drawbacks, and an important object of the present invention is to provide a technique capable of preventing loosening of bolts over a long period of time and maintaining an ideal thermal coupling state between a cooling plate and a battery stack in a structure in which the cooling plate is fixed to the battery stack through the bolts.

### Solution to problem

A power supply device comprising: a battery stack configured to be formed by stacking a plurality of battery cells; a pair of end plates configured to be disposed at both ends of the battery stack in a stacking direction; a bind bar configured to have both ends coupled to the pair of end plates and fix the plurality of battery cells in the stacking direction; and a cooling plate configured to be made of metal different from metal of the bind bar and disposed on a surface of the battery stack in a thermally coupled state, the cooling plate being fixed to the battery stack via a plurality of bolts disposed in a longitudinal direction of the battery stack,characterized in that the bind bar presents a fixed region fixed to the cooling plate via the plurality of bolts and non-fixed regions, wherein the fixed region is provided at a central portion of a bent portion of the bind bar and wherein a length (L) of the fixed region is less than or equal to 70% of a total length of the bind bar, and the non-fixed regions of the same length are not fixed to the cooling plate via the plurality of bolts, and are provided at both ends of the bent portion of the bind bar, and wherein the plurality of bolts are disposed side by side in the fixed region provided at the central portion of the bent portion of the bind bar.

Further, an electric vehicle including the power supply device including the configuration elements of the above aspect includes the power supply device, a motor for traveling supplied with electric power from the power supply device, a vehicle body equipped with the power supply device and the motor, and a wheel driven by the motor to cause the vehicle body to travel.

Further, a power storage device including the power supply device including the configuration elements of the above aspect includes the power supply device and a power supply controller that controls charging and discharging of the power supply device, in which the power supply controller enables charging of the battery cells with electric power from outside, and controls charging to be performed on the battery cells.

### Advantageous effect of invention

The present invention is capable of fixing a cooling plate to a battery stack in an ideal state via a plurality of bolts, furthermore preventing loosening of the bolts over a long period of time, and maintaining an ideal thermal coupling state between the cooling plate and the battery stack with a power supply device having a simple structure. This is because the above power supply device fixes a binding bar, which has both ends coupled to a pair of end plates that restrain the battery stack in the stacking direction, to the cooling plate with a plurality of bolts, and the cooling plate is disposed on the surface of the battery stack, and length (L) of the fixing region formed by fixing the bind bar to the cooling plate with the plurality of bolts is less than or equal to 70% of total length (T) of the bind bar, and at the end of the bind bar, a non-fixed region that is not fixed to the cooling plate via the bolts is provided.

### BRIEF DESCRIPTION OF DRAWINGS

FIG. 1 is a perspective view of a power supply device according to an exemplary embodiment of the present invention.
FIG. 2 is an exploded perspective view of the power supply device shown in FIG. 1.
FIG. 3 is a schematic cross-sectional view of the power supply device shown in FIG. 1.
FIG. 4 is a bottom view of the power supply device shown in FIG. 1.
FIG. 5 is a schematic cross-sectional view of a power supply device according to another exemplary embodiment of the present invention.
FIG. 6 is a bottom view of the power supply device shown in FIG. 5.
FIG. 7 is a schematic cross-sectional view of a power supply device according to another exemplary embodiment of the present invention.
FIG. 8 is a schematic cross-sectional view of a power supply device according to another exemplary embodiment of the present invention.
FIG. 9 is a block diagram showing an example in which a power supply device is mounted on a hybrid vehicle that runs with an engine and a motor.
FIG. 10 is a block diagram showing an example in which a power supply device is mounted on an electric vehicle that runs only with a motor.
FIG. 11 is a block diagram showing an example of using a power supply device for a power storage device.
FIG. 12 is a schematic bottom view showing a coupling portion between a cooling plate and a bind bar.
FIG. 13 is an exploded perspective view of a conventional power supply device.

### DESCRIPTION OF EMBODIMENT

First, one point of interest of the present invention will be described. A high-power power supply device mounted on a vehicle such as a hybrid vehicle or an electric vehicle has a large charging and discharging current and is used under various external conditions, and therefore the battery temperature fluctuates significantly. In particular, the temperature rise of the battery limits the range of current that can be charged and discharged, shortens the life, and impairs safety. Therefore, a power supply device with a structure that forcibly cools the battery with a cooling plate has been developed.

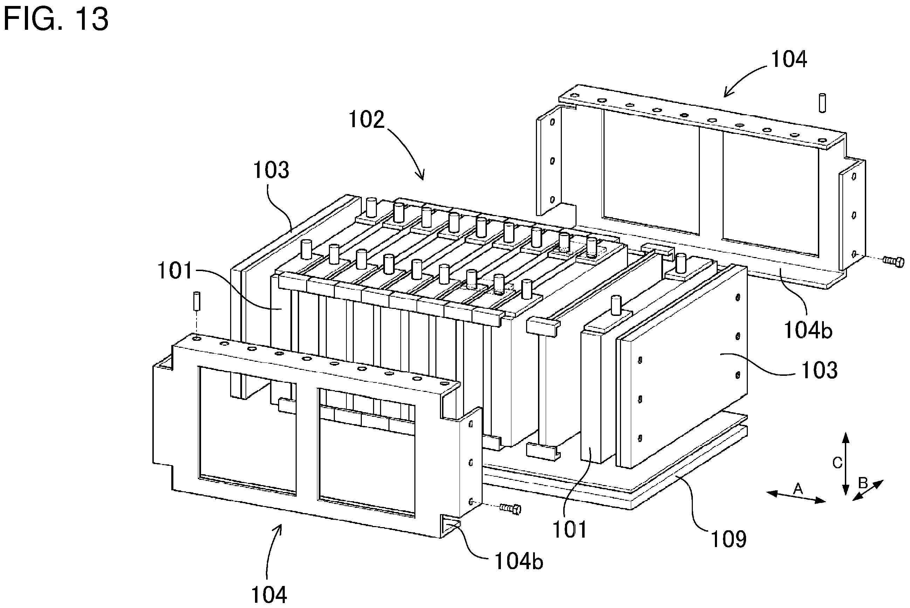

In the conventional power supply device, as shown in FIG. 13, cooling plate 109 is disposed at the bottom surface of battery stack 102 in which a plurality of battery cells 101 is stacked, and battery cells 101 are cooled by cooling plate 109. In the illustrated power supply device, bent portion 104b is provided at a lower edge of bind bar 104, bent portion 104b is fixed to cooling plate 109, and cooling plate 109 is disposed at the bottom surface of battery stack 102. Bind bar 104 is fixed at both ends to end plates 103 disposed at both ends of battery stack 102 to restrain battery stack 102. As shown in this drawing, in the power supply device in which bent portion 104b is fixed to cooling plate 109 and cooling plate 109 is disposed at the bottom surface of battery stack 102, cooling plate 109 can be fixed in a preferable thermally coupled state in close contact with the bottom surface of battery stack 102. Binding bar 104 extending in the stacking direction of battery stack 102 has elongated bent portion 104b fixed to cooling plate 109 with a plurality of bolts, and cooling plate 109 can be disposed in a thermally coupled state on the bottom surface of battery cell 101 in a preferable state.

The bolts can be disposed side by side in a longitudinal direction of the bent portion and can fix the elongated bent portion to the cooling plate. With this fixing structure, the cooling plate can be disposed on the bottom surface of the battery stack with the plurality of bolts in a preferable thermal coupling state. However, when the power supply device having this structure is used for a long period of time in a temperature environment that fluctuates significantly, the bind bar and the cooling plate relatively move, generating an adverse effect that the bolts loosen. When the bolts loosen, the thermal coupling state between the cooling plate and the battery stack deteriorates, and the cooling efficiency of each battery cell by the cooling plate is reduced, and furthermore the loosening of the bolts causes noise due to vibration and removal causes various failures. In particular, when the cooling plate and the bind bar are made of different metals, the relative movement between the bind bar and the cooling plate, which causes loosening of the bolts, occurs due to the difference in thermal expansion coefficient between the respective materials. For example, since the bind bar requires extremely strong tensile strength, high-tensile steel or stainless steel plate is used for the bind bar. On the other hand, since the cooling plate requires excellent heat conduction characteristics, aluminum or an aluminum alloy is used for the cooling plate. The bind bar and the cooling plate are required to have different characteristics, and a metal optimal for each application is selected, and they are made of different metals. Since the power supply device mounted on the electric vehicle is used in an extremely wide temperature range, the bind bar and the cooling plate expand and contract with respect to each other due to temperature changes. Since the amounts of expansion and contraction of the bind bar and the cooling plate made of different metals with respect to temperature are different from each other, the bind bar and the cooling plate are relatively displaced each time expansion and contraction due to temperature change occur, which causes loosening of the bolts. For this reason, the power supply device that fixes the cooling plate to the bind bar with the bolts can bring the cooling plate and the battery stack into an ideal thermally coupled state immediately after the manufacturing, but when it is used over a long period of time, loosening of the bolts generates various adverse effects such as deterioration of the thermal coupling state between the cooling plate and the battery stack.

Therefore, in the power supply device having the structure in which the cooling plate is thermally coupled to the battery stack to effect cooling, it is important to consider a structure that prevents loosening of the bolts for fixing the cooling plate to the battery stack for a long period of time, and can maintain the cooling plate and the battery stack in an ideal thermally coupled state.

The power supply device according to an aspect of the present invention may be specified by the following configuration. The power supply device includes battery stack 2 formed by stacking a plurality of battery cells 1, a pair of end plates 3 disposed at both ends of battery stack 2 in a stacking direction, bind bar 4 having both ends coupled to the pair of end plates 3 and restraining the plurality of battery cells 1 in the stacking direction, and cooling plate 9 disposed on a surface of battery stack 2 in a thermally coupled state and made of a metal different from that of bind bar 4, and fixes cooling plate 9 to battery stack 2 via a plurality of bolts 5 disposed in a longitudinal direction of battery stack 2. In the power supply device, a length (L) of fixed region 21 formed by fixing bind bar 4 to cooling plate 9 with the plurality of bolts 5 is set to less than or equal to 70% of a total length (T) of bind bar 4, and non-fixed region 22 that is not fixed to cooling plate 9 via bolts 5 is provided at an end of bind bar 4.

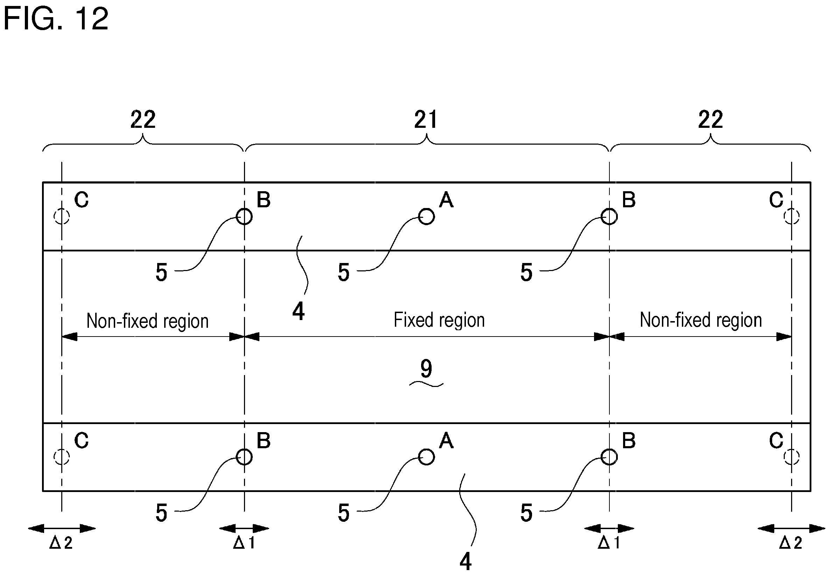

The above power supply device fixes the bind bar to the cooling plate via the plurality of bolts. However, by limiting the length (L) of the fixed region where the bolts are fixed to the cooling plate to be narrow, at a fixed part of the bolts, it is possible to reduce the relative amount of expansion and contraction between the bind bar and the cooling plate due to temperature changes. FIG. 12 is a bottom view of the power supply device in which bolts 5 disposed at five locations: the central portion (point A), both ends (point C), and points between the central portion and both ends (point B) of cooling plate 9, fix bind bar 4 to cooling plate 9. In the power supply device of this drawing, assuming that bind bar 4 and cooling plate 9 expand and contract to both sides around point A due to temperature changes, a difference (Δ1) in amount of expansion and contraction due to temperature changes at point B is 1/2 of a difference (Δ2) in amount of expansion and contraction at point C. Therefore, bolts 5 at point B have a small difference (Δ1) in amount of expansion and contraction due to temperature changes between bind bar 4 and cooling plate 9, and loosening due to relative displacement between bind bar 4 and cooling plate 9 is prevented. Therefore, in the power supply device having fixed region 21 of bind bar 4 and cooling plate 9 between points B disposed on both sides of point A, loosening of the bolts can be prevented as compared with the power supply device in which the bind bar and the cooling plate are fixed by the bolts to both ends (point C).

By the way, when a number of bolts for fixing the bind bar to the cooling plate is reduced, for example, only the central portion of the bind bar and the cooling plate is fixed by one bolt, it is necessary to use a thick and strong bolt to achieve sufficient coupling strength. In the power supply device that fixes the bind bar to the cooling plate with the thick bolt, the bolt becomes bulky and has a large outer shape, and furthermore because the thick bolt is screwed or penetrated into the cooling plate, a refrigerant passage provided in the cooling plate becomes narrow so that it becomes impossible to uniformly cool the entire cooling plate.

On the other hand, in the above power supply device, since the bind bar is fixed to the cooling plate via the plurality of bolts disposed in the fixed region, sufficient coupling strength can be achieved even when the individual bolts are made thin. In this way, in the power supply device that fixes the bind bar to the cooling plate with the thin bolts, each bolt is prevented from becoming bulky and can have a small outer shape, and furthermore because the bolt is thin, a refrigerant passage provided in the cooling plate is prevented from becoming narrow so that it is possible to achieve a feature that can uniformly cool the entire cooling plate.

In the power supply device, it is preferable that bind bar 4 be iron or iron alloy and cooling plate 9 be aluminum or aluminum alloy. Further, it is preferable that cooling plate 9 have a total length (R) of 30 cm or more.

Further, the power supply device may be configured such that bind bar 4 has bent portion 4b fixed to the surface of cooling plate 9 and bind bar 4 is fixed to cooling plate 9 via bolts 5 penetrating bent portion 4b.

Furthermore, the power supply device may be configured such that bent portion 4b is disposed on an outer surface of cooling plate 9 and bent portion 4b is fixed to the outer surface of cooling plate 9.

Furthermore, the power supply device may be configured such that bent portion 4b is disposed between cooling plate 9 and battery stack 2 and bent portion 4b is fixed to a surface of cooling plate 9 facing battery stack 2.

Furthermore, in the power supply device, it is preferable that three or more bolts 5 be disposed in fixed region 21. Bolts 5 may be configured to be screwed and fixed in female screw holes 9a provided in cooling plate 9. Alternatively, it may be configured such that nut 6 is screwed into bolt 5 and cooling plate 9 is sandwiched between bolt 5 and nut 6 to fix bind bar 4 to cooling plate 9.

Furthermore, the power supply device may be configured such that cooling plate 9 has flange portions 9Y on both sides extending along a longitudinal direction and battery stack 2 is fitted on an inner side of flange portions 9Y.

Moreover, the power supply device may be configured such that heat conduction sheet 32 is disposed between battery stack 2 and cooling plate 9.

Hereinafter, an exemplary embodiment of the present invention will be described with reference to the drawings. However, an exemplary embodiment described below is an example for embodying the technical idea of the present invention, and the present invention is not limited to the following. Further, in the present specification, members indicated in the claims are not limited to the members of the exemplary embodiment. In particular, the dimensions, materials, shapes, and the relative arrangements of the constituent members described in the exemplary embodiment are not intended to limit the scope of the present invention thereto unless otherwise specified, and are merely illustrative examples. Nothing more. The sizes and positional relationships of members shown in the drawings may be exaggerated for clarity of description. Further, in the following description, the same names and reference numerals indicate the same or similar members, and detailed description will be appropriately omitted. Further, each element constituting the present invention may be configured such that a plurality of elements is configured by the same member and one member also serves as a plurality of elements, or conversely, the function of one member can be shared and achieved by a plurality of members. Also, the content described in some of examples and exemplary embodiments may be applicable to other examples and exemplary embodiments.

### (First exemplary embodiment)

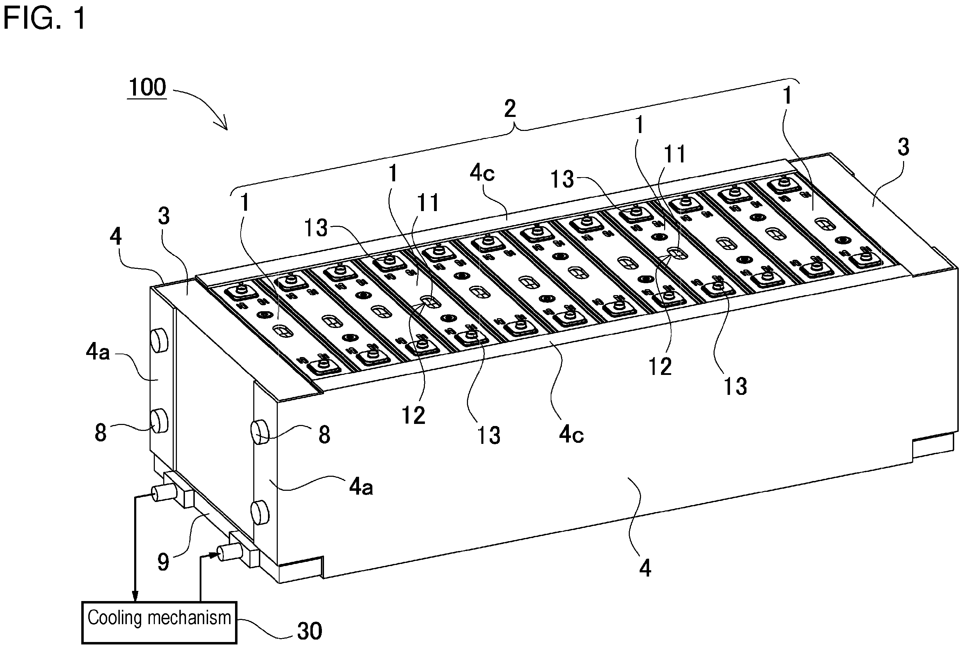

Power supply device 100 shown in FIGS. 1 to 4 includes battery stack 2 formed by stacking a plurality of battery cells 1, a pair of end plates 3 disposed at both ends of battery stack 2 in a stacking direction, bind bar 4 having both ends coupled to end plates 3 and restraining the plurality of battery cells 1 in the stacking direction, and cooling plate 9 disposed on a surface of battery stack 2 in a thermally coupled state.

### (Battery cell 1)

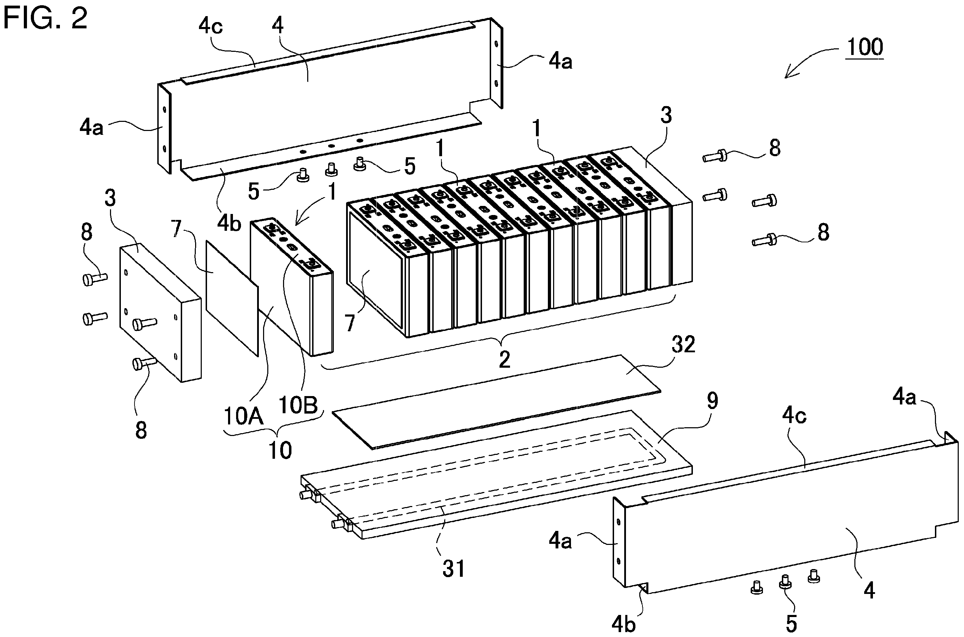

As shown in FIG. 2, battery cell 1 is a prismatic (=rectangular) battery having a width wider than the thickness, in other words, a thickness thinner than the width, and is stacked in a thickness direction to form battery stack 2. Battery cell 1 is a non-aqueous electrolyte battery in which battery case 10 is a metal case. Battery cell 1, which is a non-aqueous electrolyte battery, is a lithium ion secondary battery. However, the battery cell can also be a secondary battery such as a nickel metal hydride battery or a nickel-cadmium battery. Battery cell 1 shown in the drawing is a battery in which both surfaces having a wide width have a quadrangular shape, and is stacked with both surfaces facing each other to form battery stack 2.

In battery cell 1, an electrode body (not shown) is housed in metal battery case 10 having a prismatic outer shape and battery case 10 is filled with an electrolyte solution. Battery case 10 made of a metal case can be manufactured from aluminum or an aluminum alloy. Battery case 10 includes exterior can 10A formed by pressing a metal sheet into a cylindrical shape having a closed bottom and sealing plate 10B that hermetically closes an opening of exterior can 10A. Sealing plate 10B is a flat metal sheet and has an outer shape that is the same as the shape of the opening of exterior can 10A. Sealing plate 10B is laser-welded and fixed to an outer peripheral edge of exterior can 10A to hermetically close the opening of exterior can 10A. Sealing plate 10B fixed to exterior can 10A has positive and negative electrode terminals 13 fixed at both ends, and gas exhaust port 12 is provided in the middle of positive and negative electrode terminals 13. Inside gas exhaust port 12, exhaust valve 11 that opens at a predetermined internal pressure is provided. In battery stack 2 shown in FIGS. 1 and 2, the plurality of battery cells 1 is stacked in a posture in which the surfaces provided with exhaust valves 11 are located on substantially the same plane, and exhaust valves 11 of respective battery cells 1 are disposed on the same plane. Battery stack 2 in the drawing has the plurality of battery cells 1 stacked with sealing plates 10B provided with exhaust valves 11 facing upward.

The plurality of battery cells 1 stacked on each other is connected in series and/or in parallel by connecting positive and negative electrode terminals 13. Power supply device 100 connects positive and negative electrode terminals 13 of adjacent battery cells 1 to each other in series and/or in parallel via a bus bar (not shown). The power supply device in which adjacent battery cells are connected in series to each other can increase the output voltage to increase the output, and can connect the adjacent battery cells in parallel to increase the charging and discharging current.

### (Battery stack 2)

In battery stack 2 shown in FIG. 2, the plurality of battery cells 1 is stacked on each other via spacer 7, and battery cells 1 are connected in series. In battery stack 2 of FIG. 1, battery cells 1 adjacent to each other are disposed in the opposite direction, adjacent electrode terminals 13 are coupled by the bus bar on both sides of battery cells 1, and two adjacent battery cells 1 are connected in series such that all battery cells 1 are connected in series. However, the present invention does not specify a number of battery cells constituting the battery stack and the connection state of the battery stack.

As shown in FIG. 2, in battery stack 2, spacer 7 is sandwiched between stacked battery cells 1 to stack adjacent battery cells 1 in an insulating state. Spacer 7 is an insulating plate formed by forming plastic into a plate shape. In particular, spacer 7 formed of a plastic material having a low thermal conductivity also has an effect of effectively preventing thermal runaway of adjacent battery cells 1. Spacer 7 has a shape for disposing battery cell 1 to be fitted in a fixed position so that adjacent battery cells 1 can be stacked so as not to be displaced.

As described above, in battery cell 1 which is stacked by being insulated by spacer 7, the exterior can be made of metal such as aluminum. However, in the battery stack, it is not necessarily required to interpose the spacer between the battery cells. This is because the spacer can be unnecessary when adjacent battery cells are insulated from each other by a method in which the exterior can of the battery cell is formed of an insulating material, or the outer circumference of the exterior can of the battery cell is covered with an insulating sheet, an insulating coating or the like, or the like. Further, in the battery stack without the spacer between the battery cells, the battery cells can be cooled by adopting a system that directly cools the battery cells using a cooling medium or the like without adopting an air-cooled system that cools the battery cells by forcibly flowing cooling air between the battery cells.

### (End plate 3)

End plate 3 is coupled to bind bar 4, disposes battery stack 2 on both end surfaces, and holds battery cells 1 in the stacking direction. End plate 3 is fixed to bind bar 4 and fixes each battery cell 1 of battery stack 2. The outer shape of end plate 3 is almost equal to or slightly larger than the outer shape of battery cell 1, and it is a prismatic plate material with bind bars 4 fixed to the outer circumferential surfaces of both sides so as to have the strength that suppresses movement of the cells even when battery stack 2 is vibrated or impacted. End plate 3 is generally made of metal such as aluminum or aluminum alloy. However, although not shown, the end plate may have a structure in which a metal sheet is stacked on plastic, or may be a fiber-reinforced resin molded plate in which reinforcing fibers are embedded entirely.

End plate 3 is in close contact with the surface of battery cell 1 in a surface contact state directly or via a spacer to fix battery cell 1. In the assembly process, in power supply device 100, end plates 3 are disposed at both ends of battery stack 2, end plates 3 at both ends are pressed by a pressing machine (not shown), and bind bars 4 are inserted. After end plates 3 are fixed to bind bars 4, the pressurization state of the pressing machine is released.

### (Cooling plate 9)

Cooling plate 9 cools battery cells 1 with a cooling liquid circulating inside. In order to efficiently conduct the heat energy of battery cells 1 to the cooling liquid, cooling plate 9 is made of a metal sheet such as aluminum or aluminum alloy having excellent heat conduction characteristics. Cooling plate 9 includes circulation path 31 for the cooling liquid provided therein. Circulation path 31 is coupled to cooling mechanism 30 to cool cooling plate 9. In power supply device 100 of FIGS. 1 and 2, cooling plate 9 is disposed on the bottom surface of battery stack 2 in a thermally coupled state. However, cooling plate 9 can also be disposed on a side surface of battery stack 2. Power supply device 100 shown in the drawing has a structure in which all battery cells 1 are cooled such that a metal sheet has a rectangular shape so that the outer shape of cooling plate 9 is equal to or slightly larger than the bottom surface shape of the battery stack 2. Cooling plate 9 includes circulation path 31 for the cooling liquid by forming a cavity by inserting a metal pipe inside the metal sheet or by forming a cavity inside.

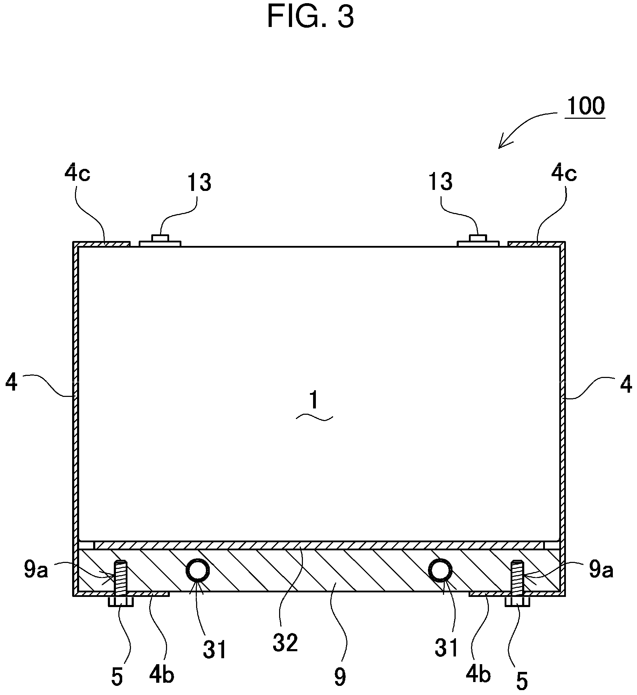

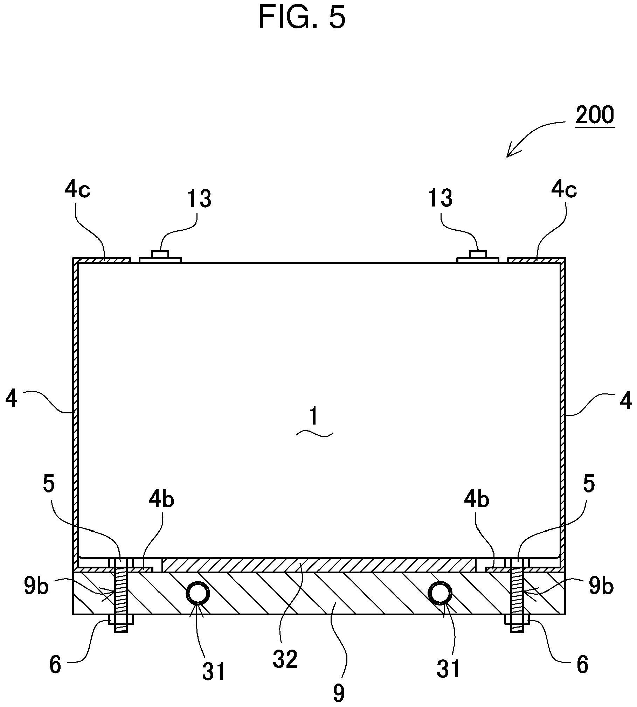

FIGS. 3 and 5 are schematic cross-sectional views of power supply devices 100, 200. In power supply devices 100, 200 in these drawings, heat conduction sheet 32 is sandwiched between battery stack 2 and cooling plate 9. Heat conduction sheet 32 is a sheet having flexibility and cushioning properties and is excellent in heat conduction characteristics. Heat conduction sheet 32 is sandwiched between battery stack 2 and cooling plate 9, one surface is closely attached to the surface of battery stack 2, and the other surface is closely attached to the surface of cooling plate 9 in a large area so that battery stack 2 and cooling plate 9 are disposed in an ideal thermally coupled state.

### (Bind bar 4)

Cooling plate 9 is fixed in a close contact state to the surface of battery stack 2 via bind bar 4. In power supply device 100 of FIGS. 1 and 2, both ends of bind bar 4 are bent inward to provide fixing piece 4a, and fixing piece 4a is fixed to the surface of end plate 3 via fixing screw 8. However, the present invention does not specify the structure for fixing bind bar 4 to end plate 3, and therefore, any other fixing structures capable of firmly fixing both ends of bind bar 4 to end plate 3 can be used. Further, bind bar 4 shown in the drawing is provided, at the upper end, with upper bent piece 4c that is bent inward. Upper bent piece 4c is disposed on the upper surface of both sides of battery stack 2, and terminal surfaces, which are the upper surfaces, of the plurality of stacked battery cells 1 are disposed on the same plane.

Cooling plate 9 is fixed to bind bar 4 and fixed to battery stack 2 in a thermally coupled state. Bind bar 4 shown in the schematic cross-sectional views of FIGS. 3 and 5 is provided with bent portion 4b fixed to the surface of cooling plate 9. Bent portion 4b is provided by bending a lower edge of bind bar 4 inward. Bind bar 4 is fixed to cooling plate 9 via bolts 5 penetrating bent portion 4b.

In power supply device 100 of FIG. 3, bent portion 4b of bind bar 4 is disposed on an outer surface of cooling plate 9, and bent portion 4b is fixed to the outer surface of cooling plate 9. In this power supply device 100, bolts 5 penetrating bent portion 4b are screwed into female screw holes 9a provided through the bottom surface of cooling plate 9 to fix bind bar 4 to cooling plate 9.

In power supply device 200 of FIG. 5, bent portion 4b of bind bar 4 is disposed between battery stack 2 and cooling plate 9, and bent portion 4b is fixed to the surface of cooling plate 9 facing battery stack 2. In this power supply device 200, nut 6 is screwed onto bolt 5 penetrating bent portion 4b and cooling plate 9, and bent portion 4b and cooling plate 9 are sandwiched between bolt 5 and nut 6 to fix bind bar 4 to cooling plate 9. This cooling plate 9 has through-hole 9b through which bolt 5 is inserted. Bolt 5 may be fixed to bind bar 4 by swaging or welding.

Both ends of bind bar 4 are fixed to end plates 3 to restrain battery cells 1 of battery stack 2 in the stacking direction. At the time of vibration and impact, bind bar 4 is subject to strong tensile force by the load from battery stack 2. Bind bar 4 is made of high-tensile steel or stainless steel plate so as to withstand the load of battery stack 2. Cooling plate 9 requires excellent heat conduction characteristics, and bind bar 4 requires characteristics for withstanding the strong tensile force. Therefore, cooling plate 9 and bind bar 4 are made of different metals. Cooling plate 9 and bind bar 4 made of different metals have different amounts of expansion and contraction with respect to temperature changes. For example, the thermal expansion coefficient of aluminum is about twice that of steel. Therefore, the amount of expansion and contraction with respect to temperature changes of cooling plate 9 made of aluminum is twice that of bind bar 4 made of high-tensile steel. When different metals having different amounts of expansion and contraction with respect to temperature are coupled, a relative displacement occurs between the different metals due to temperature changes. The displacement between the different metals due to temperature changes occurs at the coupling portion between bind bar 4 and cooling plate 9. In the structure in which bind bar 4 and cooling plate 9 made of different metals are fixed by bolts 5, bind bar 4 and cooling plate 9 relatively move due to temperature changes, which causes bolts 5 to loosen. In particular, since the power supply device is used in an extremely wide pressing range, the relative movement with respect to temperature changes is large, which causes bolts 5 to loosen.

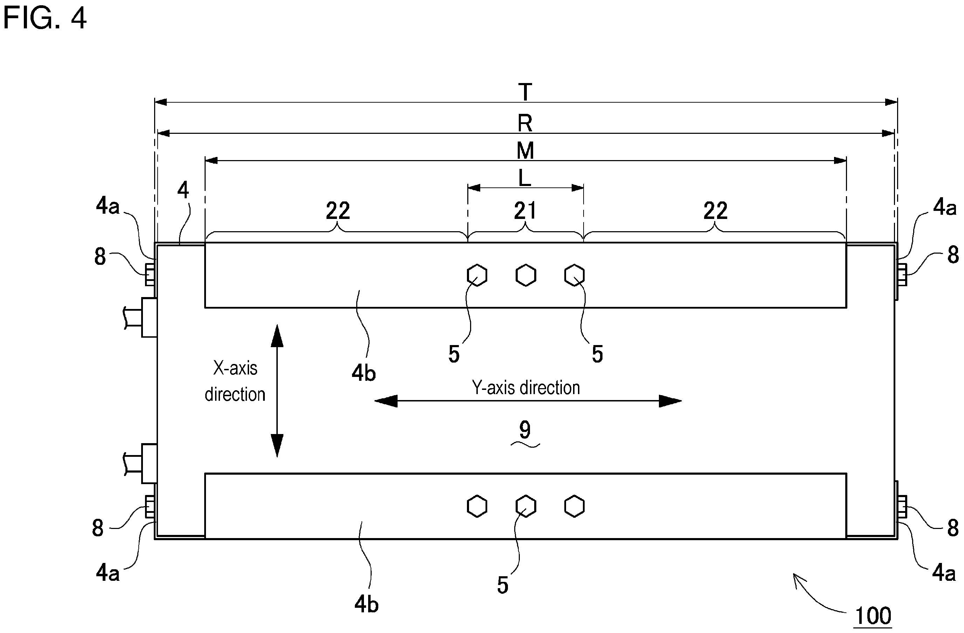

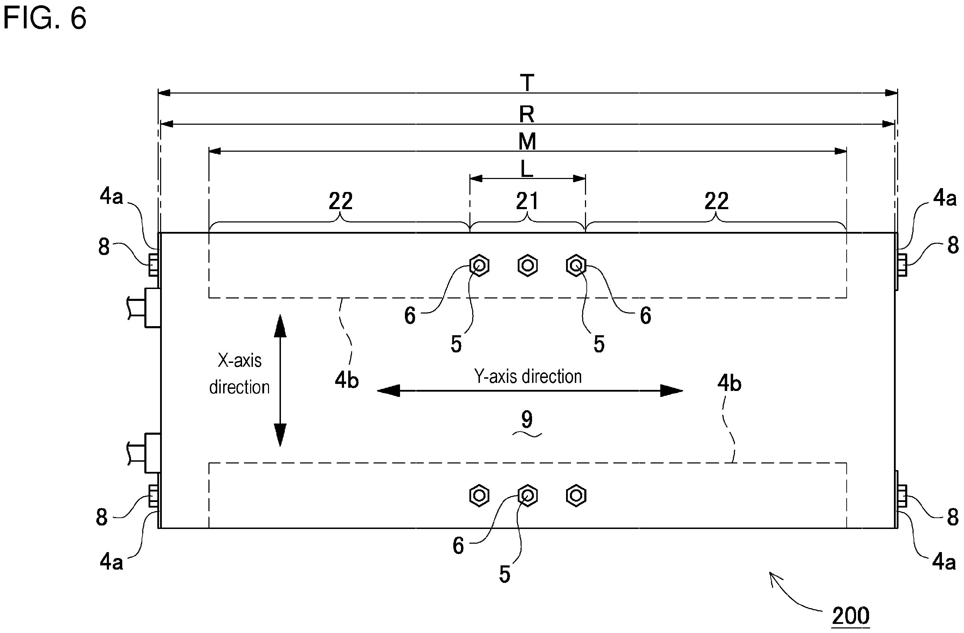

FIGS. 4 and 6 are bottom views of power supply devices 100, 200 that prevent loosening of bolts 5 due to temperature changes. However, FIG. 4 is a bottom view of power supply device 100 of FIG. 3, and FIG. 6 is a bottom view of power supply device 200 of FIG. 5. In power supply devices 100, 200 shown in these drawings, the end of bent portion 4b of bind bar 4 is not fixed to cooling plate 9 by the bolts. Bent portion 4b is fixed to cooling plate 9 via a plurality of bolts 5 so as to be firmly fixed to cooling plate 9. With the structure in which bind bar 4 is fixed to cooling plate 9 with the plurality of bolts 5, bind bar 4 can be firmly fixed to cooling plate 9 with thin bolts 5. Bind bar 4 can be fixed to cooling plate 9 with single thick and strong bolt 5, but thick bolt 5 is large and bulky, and therefore the outer shape of the power supply device becomes large. Further, when thick bolt 5 is screwed into or penetrated into cooling plate 9, the volume of circulation path 31 provided inside cooling plate 9 is limited, which causes an adverse effect that the entire body cannot be cooled efficiently. In order to prevent this adverse effect, bind bar 4 is fixed to cooling plate 9 with the plurality of bolts 5.

In order to fix bind bar 4 to cooling plate 9 with the plurality of bolts 5 and prevent bolts 5 from loosening, length (L) of fixed region 21 where bolts 5 fix bind bar 4 to cooling plate 9 is less than or equal to 70% of total length (T) of bind bar 4, and non-fixed regions 22 where bolts 5 do not fix bind bar 4 are provided at an end of bind bar 4. In power supply devices 100, 200 of FIGS. 4 and 6, fixed region 21 is provided at the central portion of bent portion 4b, and non-fixed regions 22 of the same length are provided at both ends. Power supply devices 100, 200 are characterized in that bind bar 4 can be securely fixed to cooling plate 9 in an ideal state.

Fixed region 21 with respect to total length (T) of bind bar 4 can be reduced in length (L) to reduce loosening of bolts 5 due to temperature changes. Further, fixed region 21 can be made long so that bind bar 4 can be fixed to cooling plate 9 more securely. Further, the loosening of bolts 5 due to temperature changes also changes depending on total length (R) of cooling plate 9, that is, total length (T) of bind bar 4. Therefore, length (L) of fixed region 21 with respect to total length (T) of bind bar 4 is set to an optimum value in consideration of total length (T) of bind bar 4. In power supply devices 100, 200, length (L) of fixed region 21 is set to less than or equal to 70% of total length (T) of bind bar 4 or total length (R) of cooling plate 9. However, in the power supply device in which the total length of cooling plate 9 or bind bar 4 is 30 cm or more, length (L) of fixed region 21 with respect to total length (T) of bind bar 4 is limited to, for example, less than or equal to 60%, preferably less than or equal to 50%, more preferably less than or equal to 40% in consideration of the loosening of bolts 5 due to temperature changes and the strength for fixing bind bar 4 to cooling plate 9.

In power supply devices 100, 200 of FIGS. 4 and 6, three bolts 5 are disposed side by side in fixed region 21 provided at the central portion of bent portion 4b of bind bar 4, length (L) of fixed region 21 where bolts 5 are fixed is 20% of total length (M) of bent portion 4b of bind bar 4, and non-fixed regions 22 of 80% of total length (M) of bent portion 4b are provided at both ends. Since length (L) of fixed region 21 is shortened in power supply devices 100, 200, even when they are used for a long period of time in an environment with a large temperature change, loosening of bolts 5 can be reliably prevented. In the above power supply devices, three bolts 5 are disposed in fixed region 21 to fix bind bar 4 to cooling plate 9, but two or four or more bolts 5 may be disposed in fixed region 21 to fix bind bar 4 to cooling plate 9.

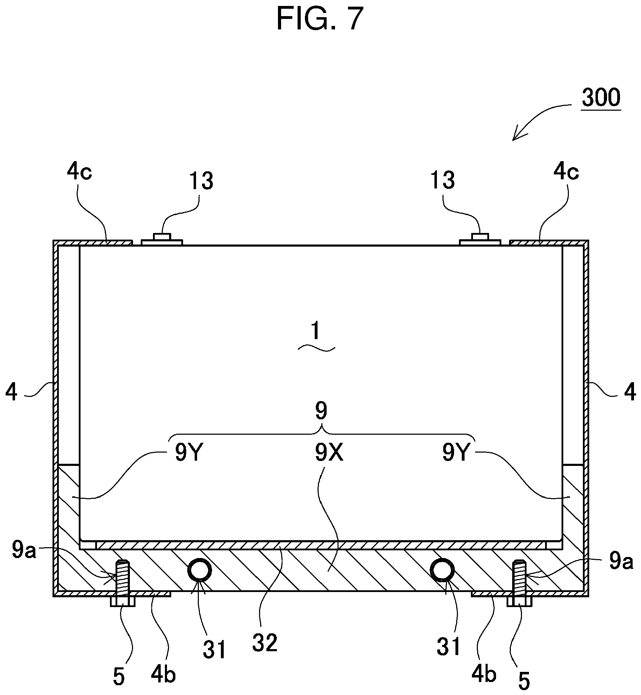

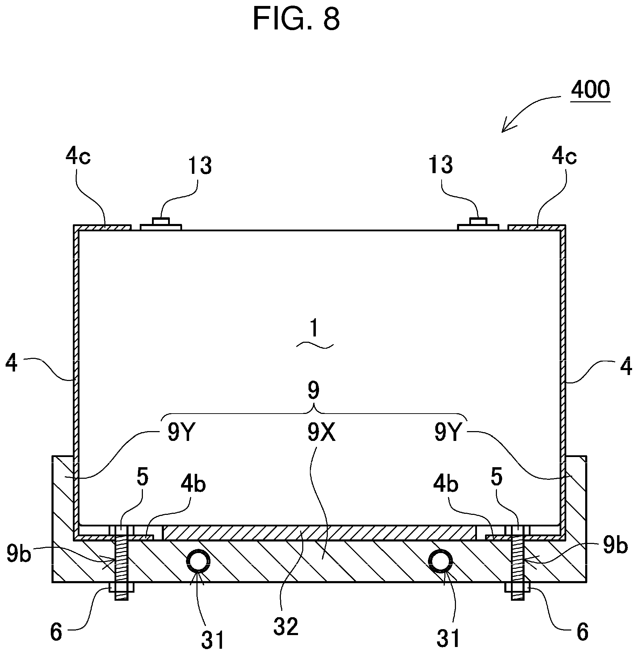

In power supply devices 300, 400 shown in the schematic cross-sectional views of FIGS. 7 and 8, flange portions 9Y extending along the longitudinal direction are provided on both sides of cooling plate 9, and battery stack 2 is disposed in a fitted state inside flange portions 9Y of both sides. In cooling plate 9 of FIG. 7, main body 9X is in close contact with the bottom surface of battery stack 2 in a thermally coupled state, and the inner surfaces of flange portions 9Y are in close contact with both side surfaces of battery stack 2 in a thermally coupled state. In cooling plate 9 of FIG. 8, main body 9X is brought into close contact with the bottom surface of battery stack 2 in a thermally coupled state, the inner side of flange portion 9Y is brought into close contact with bind bar 4, and battery stack 2 is prevented from displacing in the width direction via bind bar 4. In these cooling plates 9, battery stack 2 is disposed on an inner side of flange portions 9Y of both sides, and displacement of cooling plate 9 and battery stack 2 in the width direction (X-axis direction in FIGS. 4 and 6) is prevented. Therefore, it is possible to enhance the coupling rigidity between the two in the X-axis direction. In power supply devices 300, 400, bolts 5 prevent displacement of battery stack 2 and cooling plate 9 in the longitudinal direction (Y-axis direction in FIGS. 4 and 6), and flange portions 9Y prevents displacement in the X-axis direction. Power supply devices 300, 400 prevent the displacement in the X-axis direction with flange portions 9Y. Therefore, bolts 5 prevent only the displacement in the Y-axis direction, and it is possible to unfailingly fix battery stack 2 and cooling plate 9 without displacement. Therefore, in power supply devices 300, 400 having this structure, length (L) of fixed region 21 is shortened to effectively prevent bolts 5 from loosening on a seating surface, and cooling plate 9 and battery stack 2 can be firmly coupled in an ideal state without displacement.

Cooling plate 9 described above can integrally include flange portions 9Y by die-casting or extrusion-molding aluminum. However, flange portions 9Y can be provided as separate members by fixing flange portions 9Y to main body 9X. Although the power supply devices of the above-described exemplary embodiment are configured to include cooling plate 9 that cools battery cells 1 with the cooling liquid that circulates inside, in the present invention, the cooling plate is not necessarily configured to circulate the cooling liquid inside the plate. Specifically, the cooling plate may be a heat conduction plate formed by molding a material having a high heat transfer property such as aluminum. In the case of this configuration, the battery cells can be cooled by utilizing the heat transfer property of the plate, and since it is not necessary to circulate a cooling liquid or the like, the configuration can be simplified. These may be selected according to the required cooling performance.

Power supply devices 100, 300 of FIGS. 1 to 4 and 7 are assembled in the following processes.
(1) A predetermined number of battery cells 1 are stacked in the thickness direction of battery cells 1 with spacers 7 interposed therebetween to form battery stack 2.
(2) End plates 3 are disposed at both ends of battery stack 2, and a pair of end plates 3 are pressed and held from both sides by a pressing machine (not shown). Further, cooling plate 9 is disposed on the bottom surface of battery stack 2 with heat conduction sheet 32 interposed therebetween. In power supply device 300 of FIG. 7, battery stack 2 is fitted between flange portions 9Y provided on both sides of cooling plate 9.
(3) While pressing battery stack 2 with end plates 3, bind bar 4 is coupled and fixed to the pair of end plates 3, and bind bar 4 is fixed to cooling plate 9. Bind bar 4 has fixing piece 4a provided at both ends fixed to the outer surface of end plate 3 via fixing screws 8. Further, bind bar 4 is fixed to the outer surface of cooling plate 9 by screwing bolts 5 penetrating bent portion 4b provided at the lower end into female screw holes 9a of cooling plate 9.
   In this state, battery stack 2 is held by the pair of end plates 3 held at predetermined intervals by bind bar 4, and fixed to cooling plate 9 via bolts 5.
(4) On both sides of battery stack 2, opposing electrode terminals 13 of battery cells 1 adjacent to each other are coupled by a bus bar (not shown). The bus bar is fixed to electrode terminals 13 and connects battery cells 1 in series, or in series and in parallel. The bus bar is fixed to electrode terminals 13 by welding or screwing to electrode terminals 13.

Further, power supply devices 200, 400 of FIGS. 5, 6 and 8 are assembled in the following processes.
(1) A predetermined number of battery cells 1 are stacked in the thickness direction of battery cells 1 with spacers 7 interposed therebetween to form battery stack 2.
(2) End plates 3 are disposed at both ends of battery stack 2, the pair of end plates 3 are pressed from both sides by a pressing machine (not shown) to press battery stack 2 with a predetermined pressure with end plates 3 so as to hold battery cells 1 in a compressed state.
(3) Battery stack 2 is fixed by coupling bind bar 4 to the pair of end plates 3 in a compressed state by end plates 3. Bind bar 4 has fixing piece 4a provided at both ends fixed to the outer surface of end plate 3 via fixing screws 8.
   In this state, battery stack 2 is held via the pair of end plates 3 held at predetermined intervals by bind bar 4.
(4) Bent portion 4b of bind bar 4 is fixed to cooling plate 9. Bent portion 4b is disposed between cooling plate 9 and battery stack 2, and is fixed to the surface of cooling plate 9 facing battery stack 2. In bind bar 4, bolts 5 penetrating bent portion 4b are inserted into through-holes 9b of cooling plate 9, and nuts 6 are screwed onto bolts 5, so that cooling plate 9 is sandwiched and fixed between bolts 5 and nuts 6. At this time, heat conduction sheet 32 is interposed between battery stack 2 and cooling plate 9. In power supply device 400 of FIG. 8, battery stack 2 is fitted between flange portions 9Y provided on both sides of cooling plate 9, and flange portions 9Y are disposed on the outer surfaces of bind bar 4.
(5) On both sides of battery stack 2, opposing electrode terminals 13 of battery cells 1 adjacent to each other are coupled by a bus bar (not shown). The bus bar is fixed to electrode terminals 13 and connects battery cells 1 in series, or in series and in parallel. The bus bar is fixed to electrode terminals 13 by welding or screwing to electrode terminals 13.

The power supply devices described above are optimum for a power supply device for a vehicle that supplies power to a motor that drives an electric vehicle. As an electric vehicle equipped with the power supply device, an electric vehicle such as a hybrid vehicle or a plug-in hybrid vehicle that runs on both an engine and a motor, or an electric vehicle that runs only on a motor can be used, and the power supply device is used as a power source for these electric vehicles.

### (Power supply device for hybrid vehicles)

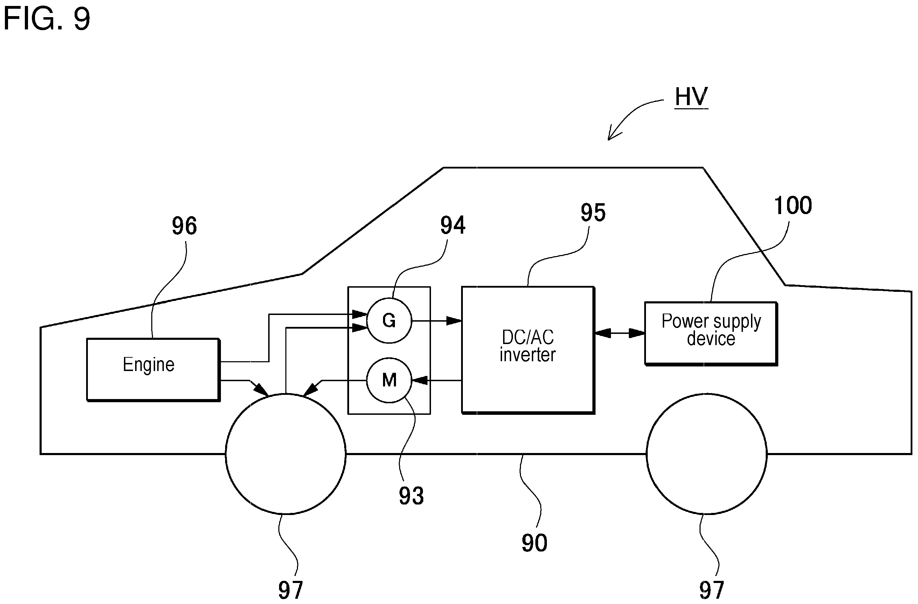

FIG. 9 shows an example of mounting a power supply device on a hybrid car that runs on both an engine and a motor. Vehicle HV equipped with the power supply device shown in this drawing includes vehicle body 90, engine 96 and traveling motor 93 that drive vehicle body 90, power supply device 100 that supplies electric power to motor 93, generator 94 for charging a battery of power supply device 100, and wheels 97 that are driven by motor 93 and engine 96 to drive vehicle body 90. Power supply device 100 is connected to motor 93 and generator 94 via DC/AC inverter 95. Vehicle HV runs on both motor 93 and engine 96 while charging and discharging the battery of power supply device 100. Motor 93 drives the vehicle by being driven in a region where engine efficiency is low, for example, during acceleration or low speed traveling. Motor 93 is driven by electric power supplied from power supply device 100. Generator 94 is driven by engine 96 or by regenerative braking when braking the vehicle, and charges the battery of power supply device 100.

### (Power supply device for electric vehicles)

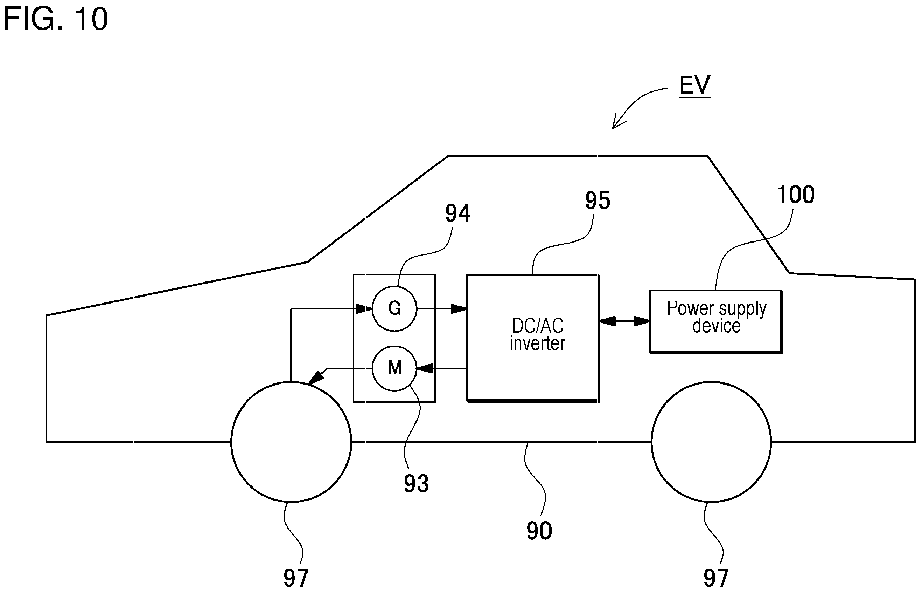

Further, FIG. 10 shows an example in which a power supply device is mounted on an electric vehicle that runs only with a motor. Vehicle EV equipped with the power supply device shown in this drawing includes vehicle body 90, traveling motor 93 that drives vehicle body 90, power supply device 100 that supplies electric power to motor 93, generator 94 for charging a battery of power supply device 100, and wheels 97 that are driven by motor 93 to drive vehicle body 90. Motor 93 is driven by electric power supplied from power supply device 100. Generator 94 is driven by the energy from regenerative braking of vehicle EV to charge the battery of power supply device 100.

### (Power supply device for power storage)

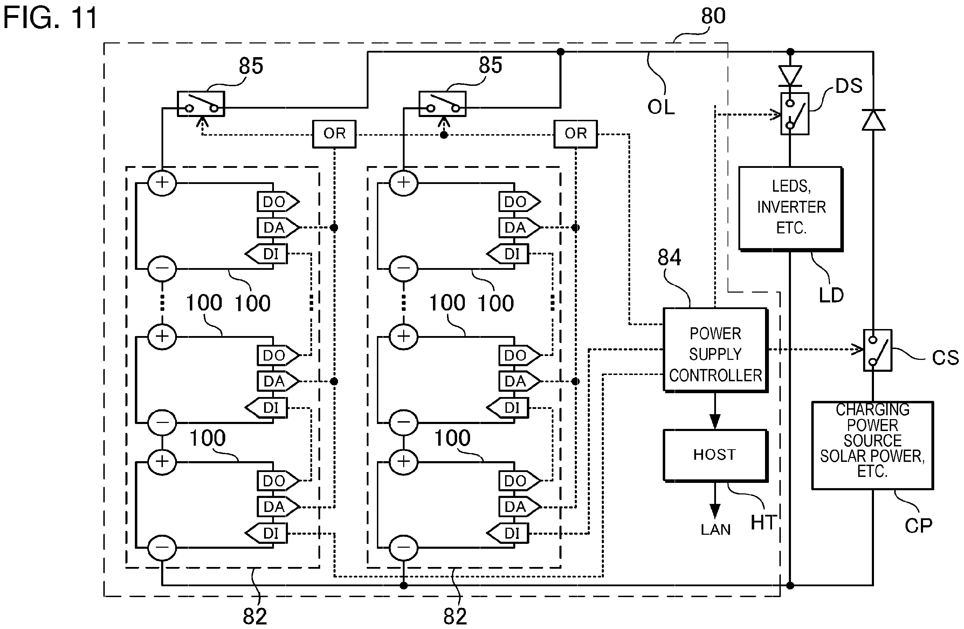

Furthermore, the present invention does not limit the application of the power supply device to a power supply device mounted on an electric vehicle, and can be used as a power supply device for a power storage apparatus that stores natural energy such as solar power generation and wind power generation, and can be used for all applications that store large electric power, such as a power supply device for a power storage device that stores electric power at midnight. The present invention can also be used, for example, as a power source for households and factories, for a power supply system that is charged with sunlight, midnight power, or the like, and discharges when necessary, a power source for street lights that charges sunlight during the day and discharges at night, or a backup power source for driving traffic signals that is driven at the time of power failure. Such an example is shown in FIG. 11. Note that in the usage example as the power storage device shown in FIG. 11, description is given of an example in which a large capacity, high output power storage apparatus 80 in which, in order to obtain desired power, a large number of power supply devices described above are connected in series or in parallel and a necessary controlling circuit is further added is constructed.

In power storage device 80 shown in FIG. 11, a plurality of power supply devices 100 is connected in a unit to constitute power source unit 82. In each power supply device 100, a plurality of battery cells is connected in series and/or in parallel. Each power supply device 100 is controlled by power supply controller 84. Power storage device 80 drives load LD after charging power source unit 82 with charging power source CP.

Therefore, power storage device 80 has a charge mode and a discharge mode. Load LD and charging power source CP are connected to power storage device 80 via discharge switch DS and charge switch CS, respectively. ON/OFF of discharge switch DS and charge switch CS is switched by power supply controller 84 of power storage device 80. In the charge mode, power supply controller 84 turns on charge switch CS and turns off discharge switch DS to permit charging from charging power source CP to power storage device 80. In addition, when charging is completed and the battery is fully charged, or when the capacity of a predetermined value or more is charged and in response to a request from load LD, power supply controller 84 turns off charge switch CS and turns on discharge switch DS to switch the mode to the charge mode to permit discharging from power storage device 80 to load LD. If necessary, charge switch CS may be turned on and discharge switch DS may be turned on to supply load LD with power and charge power storage device 80 simultaneously.

Load LD driven by power storage apparatus 80 is connected to power storage device 80 via discharge switch DS. In the discharge mode of the power storage apparatus 80, power supply controller 84 turns on discharge switch DS to connect to load LD and drives load LD with the power from power storage device 80. As discharge switch DS, a switching element such as a field effect transistor (FET) can be used. ON/OFF of discharge switch DS is controlled by power supply controller 84 of power storage device 80. Further, power supply controller 84 includes a communication interface for communicating with external devices.

In the example of FIG. 11, it is connected with host device HT according to an existing communication protocol such as universal asynchronous receiver-transmitter (UART) or RS-232C. Further, if necessary, a user interface for the user to operate the power supply system can be provided.

Each power supply device 100 includes a signal terminal and a power source terminal. The signal terminal includes input and output terminal DI, abnormality output terminal DA, and connection terminal DO. Input and output terminal DI is a terminal for inputting and outputting a signal from other power supply device 100 or power supply controller 84, and connection terminal DO is a terminal for inputting and outputting a signal to and from other power supply device 100. Further, abnormality output terminal DA is a terminal for outputting the abnormality of power supply device 100 to the outside. Further, the power source terminal is a terminal for connecting power supply devices 100 to each other in series and in parallel. Further, power source units 82 are connected to output line OL via parallel connection switch 85 and are connected in parallel with each other.

### INDUSTRIAL APPLICABILITY

The power supply device according to the present invention, and an electric vehicle and a power storage device including the same can be suitably used as a power supply device for a plug-in hybrid electric vehicle and a hybrid electric vehicle that can switch between EV driving mode and HEV driving mode, an electric vehicle, or the like. A backup power source that can be appropriately used for applications including a backup power supply device that can be mounted on a computer server rack, a backup power supply device for wireless base stations of, for example, cellular phones, a power storage device combined with a solar battery, such as a power storage power source for homes and factories or a power source for street lights, and a backup power source for traffic lights.

### REFERENCE MARKS IN THE DRAWINGS

- 100, 200, 300, 400: power supply device
- 1: battery cell
- 2: battery stack
- 3: end plate
- 4: bind bar
- 4a: fixing piece
- 4b: bent portion
- 4c: bent piece
- 5: bolt
- 6: nut
- 7: spacer
- 8: fixing screw
- 9: cooling plate
- 9X: main body
- 9Y: flange portion
- 9a: female screw hole
- 9b: through-hole
- 10: battery case
- 10A: exterior can
- 10B: sealing plate
- 11: exhaust valve
- 12: gas exhaust port
- 13: electrode terminal
- 21: fixed region
- 22: non-fixed region
- 30: cooling mechanism
- 31: circulation path
- 32: heat conduction sheet
- 80: power storage device
- 82: power source unit
- 84: power supply controller
- 85: parallel connection switch
- 90: vehicle body
- 93: motor
- 94: generator
- 95: DC/AC inverter
- 96: engine
- 97: wheel
- 101: battery cell
- 102: battery stack
- 103: end plate
- 104: bind bar
- 104b: bent portion
- 109: cooling plate
- EV: vehicle
- HV: vehicle
- LD: load
- CP: charging power source
- DS: discharge switch
- CS: charge switch
- OL: output line
- HT: host device
- DI: input and output terminal
- DA: abnormality output terminal
- DO: connection terminal

## Claims

1. A power supply device (100, 200, 300, 400) comprising:
a battery stack (2) configured to be formed by stacking a plurality of battery cells (1);
a pair of end plates (3) configured to be disposed at both ends of the battery stack (2) in a stacking direction;
a bind bar (4) configured to have both ends coupled to the pair of end plates (3) and fix the plurality of battery cells (1) in the stacking direction; and
a cooling plate (9) configured to be made of metal different from metal of the bind bar (4) and disposed on a surface of the battery stack (2) in a thermally coupled state, the cooling plate (9) being fixed to the battery stack (2) via a plurality of bolts (5) disposed in a longitudinal direction of the battery stack (2),
**characterized in that** the bind bar (4) presents a fixed region (21) fixed to the cooling plate (9) via the plurality of bolts (5) and non-fixed regions (22), wherein the fixed region (21) is provided at a central portion of a bent portion (4b) of the bind bar (4) and wherein a length (L) of the fixed region (21) is less than or equal to 70% of a total length (T) of the bind bar (4), and the non-fixed regions (22) of the same length are not fixed to the cooling plate (9) via the plurality of bolts (5), and are provided at both ends of the bent portion (4b) of the bind bar (4), and wherein the plurality of bolts (5) are disposed side by side in the fixed region (21) provided at the central portion of the bent portion (4b) of the bind bar (4).

2. The power supply device (100, 200, 300, 400) according to claim 1,
wherein
the bind bar (4) is iron or an iron alloy, and
the cooling plate (9) is aluminum or an aluminum alloy.

3. The power supply device (100, 200, 300, 400) according to claim 1 or 2, wherein the cooling plate (9) has a total length of 30 cm or more.

4. The power supply device (100, 200, 300, 400) according to any one of claims 1 to 3, wherein
the bind bar (4) has the bent portion (4b) fixed to a surface of the cooling plate (9), and
the bind bar (4) is fixed to the cooling plate (9) via the plurality of bolts (5) penetrating the bent portion (4b).

5. The power supply device (100, 300) according to claim 4, wherein
the bent portion (4b) is disposed on an outer surface of the cooling plate (9), and
the bent portion (4b) is fixed to the outer surface of the cooling plate (9).

6. The power supply device (200, 400) according to claim 4, wherein
the bent portion (4b) is disposed between the cooling plate (9) and the battery stack (2), and
the bent portion (4b) is fixed to a surface of the cooling plate (9) facing the battery stack (2).

7. The power supply device (100, 200, 300, 400) according to any one of claims 1 to 6, wherein three or more pieces of the plurality of bolts (5) are disposed in the fixed region (21).

8. The power supply device (100, 300) according to any one of claims 1 to 7, wherein the plurality of bolts (5) are screwed and fixed into female screw holes (9a) provided in the cooling plate (9).

9. The power supply device (200, 400) according to any one of claims 1 to 7, wherein
nuts (6) are screwed onto the plurality of bolts (5),
the cooling plate (9) is sandwiched between the plurality of bolts (5) and the nuts (6), and
the bind bar (4) is fixed to the cooling plate (9).

10. The power supply device according to any one of claims 1 to 9, wherein
the cooling plate (9) has flange portions (9Y) on both sides extending along the longitudinal direction, and
the battery stack (2) is fitted on an inner side of the flange portions (9Y).

11. The power supply device (300, 400) according to any one of claims 1 to 10, wherein a heat conduction sheet (32) is disposed between the battery stack (2) and the cooling plate (9).

12. An electric vehicle (HV, EV) comprising the power supply device (100, 200, 300, 400) according to any one of claims 1 to 11, the electric vehicle (HV, EV) comprising:
the power supply device (100, 200, 300, 400),
a motor (93) for traveling supplied with electric power from the power supply device (100, 200, 300, 400),
a vehicle body (90) equipped with the power supply device and the motor (93), and
a wheel (97) driven by the motor (93) to cause the vehicle body (90) to travel.

13. A power storage device (80) comprising the power supply device (100, 200, 300, 400) according to any one of claims 1 to 11, the power storage apparatus (80) comprising:
the power supply device (100, 200, 300, 400); and
a power supply controller (84) that controls charging and discharging of the power supply device (100, 200, 300, 400), wherein the power supply controller (84) enables charging of the plurality of battery cells (1) with electric power from outside, and controls charging to be performed on the plurality of battery cells (1).

## Patentansprüche

1. Stromversorgungsvorrichtung (100, 200, 300, 400), die Folgendes umfasst:
einen Batteriestapel (2), der dazu ausgelegt ist, durch Stapeln einer Vielzahl von Batteriezellen (1) gebildet zu sein;
ein Paar Endplatten (3), die dazu ausgelegt sind, in einer Stapelrichtung an beiden Enden des Batteriestapels (2) angeordnet zu sein;
einen Binderstab (4), der dazu ausgelegt ist, mit beiden Enden an das Paar Endplatten (3) gekoppelt zu sein und die Vielzahl von Batteriezellen (1) in der Stapelrichtung zu befestigen; und
eine Kühlplatte (9), die dazu ausgelegt ist, aus einem Metall zu bestehen, das sich von einem Metall des Binderstabs (4) unterscheidet, und in einem thermisch gekoppelten Zustand auf einer Fläche des Batteriestapels (2) angeordnet ist, wobei die Kühlplatte (9) via eine Vielzahl von Bolzen (5), die in einer Längsrichtung des Batteriestapels (2) angeordnet sind, am Batteriestapel (2) befestigt ist,
**dadurch gekennzeichnet, dass** der Binderstab (4) eine befestigte Region (21), die via die Vielzahl von Bolzen (5) an der Kühlplatte (9) befestigt ist, und nicht befestigte Regionen (22) präsentiert, wobei die befestigte Region (21) in einem Mittenabschnitt eines gebogenen Abschnitts (4b) des Binderstabs (4) bereitgestellt ist und wobei eine Länge (L) der befestigten Region (21) kleiner als oder gleich 70% einer Gesamtlänge (T) des Binderstabs (4) ist, und die nicht befestigten Regionen (22) derselben Länge nicht via die Vielzahl von Bolzen (5) an der Kühlplatte (9) befestigt und an beiden Enden des gebogenen Abschnitts (4b) des Binderstabs (4) bereitgestellt sind, und wobei die Vielzahl von Bolzen (5) in der befestigten Region (21) nebeneinander angeordnet sind, die im Mittenabschnitt des gebogenen Abschnitts (4b) des Binderstabs (4) bereitgestellt sind.

2. Stromversorgungsvorrichtung (100, 200, 300, 400) nach Anspruch 1, wobei
der Binderstab (4) aus Eisen oder einer Eisenlegierung besteht, und
die Kühlplatte (9) aus Aluminium oder einer Aluminiumlegierung besteht.

3. Stromversorgungsvorrichtung (100, 200, 300, 400) nach Anspruch 1 oder 2, wobei die Kühlplatte (9) eine Gesamtlänge von 30 cm oder mehr aufweist.

4. Stromversorgungsvorrichtung (100, 200, 300, 400) nach einem der Ansprüche 1 bis 3, wobei
der gebogene Abschnitt (4b) des Binderstabs (4) an einer Fläche der Kühlplatte (9) befestigt ist, und
der Binderstab (4) via die Vielzahl von Bolzen (5), die den gebogenen Abschnitt (4b) durchdringen, an der Kühlplatte (9) befestigt ist.

5. Stromversorgungsvorrichtung (100, 300) nach Anspruch 4, wobei
der gebogene Abschnitt (4b) auf einer Außenfläche der Kühlplatte (9) angeordnet ist, und
der gebogene Abschnitt (4b) an der Außenfläche der Kühlplatte (9) befestigt ist.

6. Stromversorgungsvorrichtung (200, 400) nach Anspruch 4, wobei
der gebogene Abschnitt (4b) zwischen der Kühlplatte (9) und dem Batteriestapel (2) angeordnet ist, und
der gebogene Abschnitt (4b) an einer Fläche der Kühlplatte (9) gegenüber dem Batteriestapel (2) befestigt ist.

7. Stromversorgungsvorrichtung (100, 200, 300, 400) nach einem der Ansprüche 1 bis 6, wobei drei oder mehr Stück der Vielzahl von Bolzen (5) in der befestigten Region (21) angeordnet sind.

8. Stromversorgungsvorrichtung (100, 300) nach einem der Ansprüche 1 bis 7, wobei die Vielzahl von Bolzen (5) in Innengewindelöcher (9a), die in der Kühlplatte (9) bereitgestellt sind, eingeschraubt und befestigt sind.

9. Stromversorgungsvorrichtung (200, 400) nach einem der Ansprüche 1 bis 7, wobei
auf die Vielzahl von Bolzen (5) Muttern (6) geschraubt sind,
die Kühlplatte (9) zwischen der Vielzahl von Bolzen (5) und den Muttern (6) eingesetzt ist, und
der Binderstab (4) an der Kühlplatte (9) befestigt ist.

10. Stromversorgungsvorrichtung nach einem der Ansprüche 1 bis 9, wobei
die Kühlplatte (9) auf beiden Seiten Flanschabschnitte (9Y) aufweist, die sich entlang der Längsrichtung erstrecken, und
der Batteriestapel (2) sich auf einer Innenseite der Flanschabschnitte (9Y) befindet.

11. Stromversorgungsvorrichtung (300, 400) nach einem der Ansprüche 1 bis 10, wobei zwischen dem Batteriestapel (2) und der Kühlplatte (9) ein Wärmeleitblech (32) angeordnet ist.

12. Elektrofahrzeug (HV, EV), das die Stromversorgungsvorrichtung (100, 200, 300, 400) nach einem der Ansprüche 1 bis 11 umfasst, wobei das Elektrofahrzeug (HV, EV) Folgendes umfasst:
die Stromversorgungsvorrichtung (100, 200, 300, 400),
einen Motor (93) zum Fahren, der von der Stromversorgungsvorrichtung (100, 200, 300, 400) mit elektrischem Strom versorgt wird,
einen Fahrzeugkörper (90), der mit der Stromversorgungsvorrichtung und dem Motor (93) ausgerüstet ist, und
ein Rad (97), das vom Motor (93) angetrieben wird, um den Fahrzeugkörper (90) zum Fahren zu veranlassen.

13. Stromspeichervorrichtung (80), die die Stromversorgungsvorrichtung (100, 200, 300, 400) nach einem der Ansprüche 1 bis 11 umfasst, wobei die Stromspeichervorrichtung (80) Folgendes umfasst:
die Stromversorgungsvorrichtung (100, 200, 300, 400); und
eine Stromversorgungssteuerung (84), die das Laden und Entladen der Stromversorgungsvorrichtung (100, 200, 300, 400) steuert, wobei die Stromversorgungssteuerung (84) das Laden der Vielzahl von Batteriezellen (1) von außen mit elektrischem Strom ermöglicht und das Durchführen des Ladens der Vielzahl von Batteriezellen (1) steuert.

## Revendications

1. Dispositif d'alimentation électrique (100, 200, 300, 400) comprenant :
un empilement de batteries (2) configuré pour être formé en empilant une pluralité d'éléments de batterie (1) ;
une paire de plaques d'extrémité (3) configurées pour être disposées aux deux extrémités de l'empilement de batteries (2) dans une direction d'empilement ;
une barre de liaison (4) configurée pour avoir deux extrémités couplées à la paire de plaques d'extrémité (3) et fixer la pluralité d'éléments de batterie (1) dans la direction d'empilement ; et
une plaque de refroidissement (9) configurée pour être réalisée avec un métal différent du métal de la barre de liaison (4) et disposée sur une surface de l'empilement de batteries (2) dans un état thermiquement couplé, la plaque de refroidissement (9) étant fixée à l'empilement de batteries (2) via une pluralité de boulons (5) disposés dans une direction longitudinale de l'empilement de batteries (2),
**caractérisé en ce que** la barre de liaison (4) présente une région fixée (21) fixée sur la plaque de refroidissement (9) via la pluralité de boulons (5) et des régions non fixées (22), dans lequel la région fixée (21) est prévue au niveau d'une partie centrale d'une partie courbée (4b) de la barre de liaison (4) et dans lequel une longueur (L) de la région fixée (21) est inférieure ou égale à 70% d'une longueur totale (T) de la barre de liaison (4), et les régions non fixées (22) de la même longueur ne sont pas fixées sur la plaque de refroidissement (9) via la pluralité de boulons (5) et sont prévues aux deux extrémités de la partie courbée (4b) de la barre de liaison (4), et dans lequel la pluralité de boulons (5) sont disposés côte à côte dans la région fixée (21) prévue au niveau de la partie centrale de la partie courbée (4b) de la barre de liaison (4).

2. Dispositif d'alimentation électrique (100, 200, 300, 400) selon la revendication 1, dans lequel :
la barre de liaison (4) est en fer ou en alliage de fer, et
la plaque de refroidissement (9) est en aluminium ou en alliage d'aluminium.

3. Dispositif d'alimentation électrique (100, 200, 300, 400) selon la revendication 1 ou 2, dans lequel la plaque de refroidissement (9) a une longueur totale de 30 cm ou plus.

4. Dispositif d'alimentation électrique (100, 200, 300, 400) selon l'une quelconque des revendications 1 à 3, dans lequel :
la barre de liaison (4) a la partie courbée (4b) fixée sur une surface de la plaque de refroidissement (9), et
la barre de liaison (4) est fixée sur la plaque de refroidissement (9) via la pluralité de boulons (5) pénétrant dans la partie courbée (4b).

5. Dispositif d'alimentation électrique (100, 300) selon la revendication 4, dans lequel :
la partie courbée (4b) est disposée sur une surface externe de la plaque de refroidissement (9), et
la partie courbée (4b) est fixée sur la surface externe de la plaque de refroidissement (9).

6. Dispositif d'alimentation électrique (200, 400) selon la revendication 4, dans lequel :
la partie courbée (4b) est disposée entre la plaque de refroidissement (9) et l'empilement de batteries (2), et
la partie courbée (4b) est fixée sur une surface de la plaque de refroidissement (9) faisant face à l'empilement de batteries (2).

7. Dispositif d'alimentation électrique (100, 200, 300, 400) selon l'une quelconque des revendications 1 à 6, dans lequel trois pièces de la pluralité de boulons (5) ou plus sont disposées dans la région fixée (21).

8. Dispositif d'alimentation électrique (100, 300) selon l'une quelconque des revendications 1 à 7, dans lequel la pluralité de boulons (5) sont vissés et fixés dans des trous de vis femelles (9a) prévus dans la plaque de refroidissement (9).

9. Dispositif d'alimentation électrique (200, 400) selon l'une quelconque des revendications 1 à 7, dans lequel :
des écrous (6) sont vissés sur la pluralité de boulons (5),
la plaque de refroidissement (9) est prise en sandwich entre la pluralité de boulons (5) et les écrous (6), et
la barre de liaison (4) est fixée sur la plaque de refroidissement (9).

10. Dispositif d'alimentation électrique selon l'une quelconque des revendications 1 à 9, dans lequel :
la plaque de refroidissement (9) a des parties de bride (9Y) des deux côtés s'étendant le long de la direction longitudinale, et
l'empilement de batteries (2) est monté sur un côté interne des parties de bride (9Y).

11. Dispositif d'alimentation électrique (300, 400) selon l'une quelconque des revendications 1 à 10, dans lequel une feuille de conduction de chaleur (32) est disposée entre l'empilement de batteries (2) et la plaque de refroidissement (9) .

12. Véhicule électrique (HV, EV) comprenant le dispositif d'alimentation électrique (100, 200, 300, 400) selon l'une quelconque des revendications 1 à 11, le véhicule électrique (HV, EV) comprenant :
le dispositif d'alimentation électrique (100, 200, 300, 400),
un moteur (93) pour le déplacement, alimenté avec l'énergie électrique provenant du dispositif d'alimentation électrique (100, 200, 300, 400),
un corps de véhicule (90) équipé avec le dispositif d'alimentation électrique et le moteur (93), et
une roue (97) entraînée par le moteur (93) pour amener le corps de véhicule (90) à se déplacer.

13. Dispositif de stockage d'énergie (80) comprenant le dispositif d'alimentation électrique (100, 200, 300, 400) selon l'une quelconque des revendications 1 à 11, l'appareil de stockage d'énergie (80) comprenant :
le dispositif d'alimentation électrique (100, 200, 300, 400) ; et
un organe de commande d'alimentation électrique (84) qui commande le chargement et le déchargement du dispositif d'alimentation électrique (100, 200, 300, 400), dans lequel l'organe de commande d'alimentation électrique (84) permet de charger la pluralité d'éléments de batterie (1) avec l'énergie électrique provenant de l'extérieur, et commande le chargement à réaliser sur la pluralité d'éléments de batterie (1).
